# EUROPÄISCHE PATENTSCHRIFT

(11) **EP 3 077 947 B1**
(45) Veröffentlichungstag und Bekanntmachung des Hinweises auf die Patenterteilung: **13.02.2019**
(21) Anmeldenummer: 14811802.9
(22) Anmeldetag: 04.12.2014
(51) Int. Cl.: G06F 21/41, H04L 29/06

(54) **VERFAHREN ZUM ERFASSEN EINER ELEKTRONISCHEN AUFFORDERUNG ZUR AUSFÜHRUNG EINES ELEKTRONISCHEN DIENSTES**
METHOD FOR RECORDING AN ELECTRONIC REQUEST FOR THE PERFORMANCE OF AN ELECTRONIC SERVICE
PROCÉDÉ D'ACQUISITION D'UNE REQUÊTE ÉLECTRONIQUE EN VUE DE LA PRESTATION D'UN SERVICE ÉLECTRONIQUE

(30) Priorität: 06.12.2013 DE 102013113661
(43) Veröffentlichungstag der Anmeldung: 12.10.2016
(73) Patentinhaber: Bundesdruckerei GmbH, 10969 Berlin (DE)
(72) Erfinder: SEEGEBARTH, Christian, 20249 Hamburg (DE); BYSZIO, Frank, 16348 Wandlitz (DE)
(74) Vertreter: Patentship Patentanwaltsgesellschaft mbH
(86) Internationale Anmeldenummer: PCT/EP2014/076493
(87) Internationale Veröffentlichungsnummer: WO 2015/082581

(56) Entgegenhaltungen:
- EP-A1- 2 620 892
- EP-A1- 2 631 837
- WO-A1-2005/032100
- "Architektur elektronischer Personalausweis und elektroni-scher Aufenthaltstitel", , 27. Mai 2011 (2011-05-27), XP055059591, Bonn, Germany Gefunden im Internet: URL:https://www.bsi.bund.de/DE/Publikation en/TechnischeRichtlinien/tr03127/tr-03127. html [gefunden am 2013-04-15]

## Beschreibung

Die Entwicklung des Internets ermöglichte die Schaffung einer Mehrzahl unterschiedlicher elektronischer Dienste, durch welche Dienstleistungen, wie elektronische Transaktionen oder Erwerb von Waren, implementiert werden.

Ein elektronischer Dienst wird üblicherweise durch einen Benutzer eines Kommunikationsterminals, beispielsweise eines Computers oder eines Smartphones, über das Internet angefordert. Hierzu wird üblicherweise eine Aufforderung zum Ausführen des Dienstes an eine Serverentität übertragen, welche die Ausführung des elektronischen Dienstes initiieren kann. Hierbei wird, insbesondere bei Bezahldiensten, in einem nachgelagerten Schritt eine Identifikation des Benutzers, beispielsweise mittels einer PIN oder eines elektronischen Personalausweises mit einem Signaturzertifikat, durchgeführt.

Vor der sicheren Identifikation mittels beispielsweise einer PIN kann der Benutzer indirekt anhand einer IP-Adresse des verwendeten Kommunikationsterminals identifiziert werden. Dies kann jedoch dazu führen, dass elektronische Dienste missbräuchlich angefordert werden. Dies kann beispielsweise dann problematisch sein, wenn elektronische Dienste vermehrt angefordert werden und der Prozess vor der eigentlichen Identifikation des Benutzers abgebrochen wird. Die vermehrte Anforderung von elektronischen Dienstleistungen kann insbesondere durch fremde Computer automatisch ausgelöst werden, wodurch die die elektronischen Dienste bereitstellenden Server unnötig belastet werden. Dies kann zwar durch einen vorgelagerten CAPTSCHA-Test (CAPTSCHA: Completely Automated Public Turing test to tell Computers and Humans Apart) zumindest teilweise abgesichert werden. Der CAPTSCHA-Test kann jedoch umgangen oder sogar missbräuchlich verwendet werden, wenn mit jeder Anmeldung bzw. Aufforderung ein anderer Benutzer angegeben wird oder wenn etwaige Freiversuchskontingente, automatisch oder manuell, ausgeschöpft werden.

Die missbräuchliche Anforderung von elektronischen Diensten ist insbesondere dann problematisch, wenn durch den elektronischen Dienst Dienstleistungen vor der eigentlichen Identifikation oder sogar vor dem Geschäftsabschluss oder Rechnungsstellung ausgelöst werden, wie es beispielsweise bei einer Signaturkartenbestellung oder Zertifikatsbestellung der Fall sein kann. Durch die Auslösung eines elektronischen Prozess zur Ausführung einer elektronischen Dienstleistung und den Abbruch des elektronischen Prozesses können hoher Aufwand und somit hohe Kosten aufseiten des Dienste-Providers entstehen.

Aus der EP 2 631 837 A1 (BUNDESDRUCKEREI GMBH [DE]; AGETO INNOVATION GMBH [DE]) vom 28. August 2013 ist ein Verfahren bekannt, bei dem Pseudonyme Identifikation zur Erbringung von Dienstleistung genutzt wird. Bei diesem Verfahren wird zusätzlich ein nur für die Dienstleistung selbst verwendetes abgeleitetes Pseudonym erzeugt, das dauerhaft gespeichert wird. Zur Verhinderung von Missbrauch werden Sperrlisten eingesetzt.

Es ist daher die Aufgabe der vorliegenden Erfindung, ein Konzept zu schaffen, das eine missbräuchliche Ausführung eines elektronischen Prozesses erschwert.

Diese Aufgabe wird durch die Merkmale der unabhängigen Ansprüche gelöst. Vorteilhafte Weiterbildungsformen sind Gegenstand der Unteransprüche, der Beschreibung sowie der Figuren.

Die vorliegende Erfindung basiert auf der Erkenntnis, dass die obige Aufgabe durch die Ausnutzung der Funktionalität eines elektronisch auslesbaren Identifikationsdokumentes, beispielsweise Reisepasses oder Personalausweises mit einem elektronischen Chip, gelöst werden kann. Bei einer Einbindung des elektronischen Personalausweises kann beispielswese dessen elektronische Identifikation, insbesondere die Restricted Identification, welche ein Protokoll zur pseudonymen Identifizierung auf der Basis kryptographischer Verfahren bereitstellt, verwendet werden, um eine missbräuchliche Wiederholung einer Aufforderung zur Ausführung eines elektronischen Dienstes zu unterbinden.

Auf der Basis der elektronischen Identifikation des elektronischen Personalausweises wird ein elektronisches Pseudonym, beispielsweise ein Hash-Wert, erstellt, das kurzzeitig, beispielsweise für eine vorbestimmte Zeitdauer, aufseiten des Dienstanbieters gespeichert wird. Eine wiederholte Aufforderung zur Ausführung desselben elektronischen Dienstes innerhalb dieser Zeitdauer kann auf der Basis des temporär gespeicherten elektronischen Pseudonyms erfasst werden, sodass die Ausführung des elektronischen Dienstes abgelehnt werden kann. Alternativ kann auf einen früheren Prozess verwiesen werden.

Dadurch wird auch die Erfassung asynchroner Prozesse ermöglicht, wenn beispielsweise zur Auslösung einer elektronischen Dienstleistung eine elektronische Anmeldung unter

Verwendung eines elektronischen Identifikationsdokumentes beispielsweise zuerst mittels eines mobilen Kommunikationsgerätes durchgeführt wird und wenn der Prozess später mittels eines anderen Kommunikationsterminals, beispielswese eines PCs oder eines Selbstbedienungsterminals, weitergeführt wird. In diesem Fall kann eine Prozessidentifikation bzw. Dienstidentifikation, z.B. eine Zeitangabe, zusammen mit dem elektronischen Pseudonym gespeichert werden. Asynchrone Prozesse treten beispielsweise dann auf, wenn ein Benutzer zunächst einen Link auf einen elektronischen Dienst erhält, um den elektronischen Dienst ggf. später auszulösen.

Gemäß einem Aspekt betrifft die Erfindung ein Verfahren zum Erfassen einer elektronischen Aufforderung zur Ausführung eines elektronischen Dienstes, wobei die elektronische Aufforderung einem elektronischen Identifikationsdokument einer Person zugeordnet ist, wobei das elektronische Identifikationsdokument mit einer elektronischen Identifikation versehen ist, und wobei das Verfahren die folgenden Merkmale umfasst: Empfangen der elektronischen Aufforderung über ein Kommunikationsnetzwerk, Empfangen der elektronischen Identifikation des elektronischen Identifikationsdokumentes über das Kommunikationsnetzwerk, Erzeugen eines elektronischen Pseudonyms der Person auf der Basis der elektronischen Identifikation, und temporäres Speichern des elektronischen Pseudonyms für eine vorbestimmte Zeitdauer in einem Speicher, um die elektronische Aufforderung zu erfassen.

Das Verfahren kann beispielsweise durch einen Kommunikationsserver ausgeführt werden, welcher über ein Kommunikationsnetzwerk mit einem Kommunikationsterminal, das zur Aussendung der Aufforderung dienen kann, kommunizieren kann.

Die elektronische Identifikation kann beispielsweise aus einem elektronischen Identifikationsdokument mittels eines Dokumentenlesegerätes oder mittels des vorstehend genannten Kommunikationsterminals erfolgen, falls dieses elektronische Identifikationsdokumente auslesen kann.

Die Aufforderung zur Ausführung des elektronischen Dienstes kann beispielsweise bei einer Anmeldung einer Person auf einer Internetseite, welche zum elektronischen Dienst führt, erzeugt werden. Die Aufforderung zur Ausführung des elektronischen Dienstes kann jedoch auch direkt bei einer Auslösung eines Dienstes, beispielsweise mittels einer elektronischen Auswahl eines entsprechenden elektronischen Auswahlfeldes auf einer Web-Seite erzeugt werden. Das Kommunikationsnetzwerk kann beispielsweise das Internet sein.

Die vorbestimmte Zeitdauer kann durch den Dienstanbieter, z.B. Serviceprovider, wählbar und/oder dienstspezifisch, also für unterschiedliche Dienste unterschiedlich, sein. Die vorbestimmte Zeitdauer kann beispielsweise 1 Minute, 2 Minuten, 5 Minuten, 10 Minuten oder länger, z.B. eine Stunde, betragen.

Gemäß einer Ausführungsform wird das elektronische Pseudonym nach Ablauf der vorbestimmten Zeitdauer aus dem Speicher gelöscht. Durch das temporäre Speichern des Pseudonyms wird erreicht, dass beispielsweise kurz aufeinanderfolgende Anmeldevorgänge zur Ausführung desselben elektronischen Dienstes erfasst werden können. Durch die Löschung des elektronischen Pseudonyms wird sichergestellt, dass der elektronische Dienst nach Ablauf der vorbestimmten Zeitdauer wieder aufgefordert werden kann.

Die elektronische Identifikation kann beispielsweise gesondert übertragen werden. Dies ist beispielsweise dann der Fall, wenn die elektronische Identifikation unter Verwendung eines Dokumentenlesegerätes aus dem elektronischen Identifikationsdokument ausgelesen und gesondert über das Kommunikationsnetzwerk übertragen wird. Die elektronische Identifikation und die Aufforderung können jedoch mittels desselben Kommunikationsterminals, das elektronische Identifikationsdokumente auslesen kann oder an das ein Dokumentenlesegerät angeschlossen werden kann, übertragen werden. So können die Aufforderung sowie die elektronische Identifikation zeitlich getrennt empfangen werden.

Gemäß einer Ausführungsform wird die elektronische Aufforderung zusammen mit der elektronischen Identifikation empfangen.

Gemäß einer Ausführungsform wird zum Empfangen der elektronischen Identifikation eine Kommunikationsverbindung zu dem elektronischen Identifikationsdokument, insbesondere über ein Kommunikationsnetzwerk, aufgebaut. Die Kommunikationsverbindung zu dem elektronischen Identifikationsdokument kann über einen Aufbau einer Kommunikationsverbindung zu einem Dokumentenlesegerät oder einem Kommunikationsterminal, das das elektronische Identifikationsdokument auslesen kann, erfolgen.

Gemäß einer Ausführungsform wird das elektronische Pseudonym mit einem in dem Speicher gespeicherten weiteren elektronischen Pseudonym verglichen, wobei der elektronische Dienst ausgeführt wird, falls das elektronische Pseudonym und das weitere elektronischen Pseudonym unterschiedlich sind oder unterschiedlichen elektronischen Diensten zugeordnet sind, und wobei die Ausführung des elektronischen Dienstes unterbunden wird oder die empfangene Aufforderung verworfen wird, falls das elektronische Pseudonym und das weitere elektronische Pseudonym gleich sind oder falls das elektronische Pseudonym und das weitere elektronische Pseudonym gleich sind und demselben elektronischen Dienst zugeordnet sind. Dadurch wird sichergestellt, dass derselbe Dienst von derselben Person nicht innerhalb der vorbestimmten Zeitdauer wiederholt angefordert werden kann. Nach Ablauf der vorbestimmten Zeitdauer wird das elektronische Pseudonym gelöscht, sodass der elektronische Dienst durch dieselbe Person angefordert werden kann.

Gemäß einer Ausführungsform wird der elektronische Dienst ausgeführt, insbesondere nur dann ausgeführt, wenn das elektronische Pseudonym, insbesondere zum Zeitpunkt des Empfangs der elektronischen Aufforderung, nicht bereits in dem Speicher gespeichert ist oder in dem Speicher gespeichert und einem anderen elektronischen Dienst zugeordnet ist. Dadurch wird eine erneute Ausführung des elektronischen Dienstes für dieselbe Person innerhalb der vorbestimmten Zeitdauer unterbunden.

Gemäß einer Ausführungsform wird ein Hinweissignal erzeugt, wenn das elektronische Pseudonym zum Zeitpunkt des Empfangs der Aufforderung in dem Speicher bereits gespeichert ist oder wenn der elektronische Dienst nicht ausgeführt wird. Das Hinweissignal kann auf eine vorangegangene Ausführung desselben elektronischen Dienstes verweisen oder die Unterbindung der Ausführung des elektronischen Dienstes anzeigen.

Gemäß einer Ausführungsform wird das elektronische Pseudonym nur dann in dem Speicher gespeichert, wenn das elektronische Pseudonym nicht bereits in dem Speicher aufgrund einer vorangegangenen Aufforderung zur Ausführung desselben elektronischen Dienstes, insbesondere zum Zeitpunkt des Empfangs der elektronischen Aufforderung, gespeichert ist. Dadurch wird die wiederholte Auforderung zur Ausführung desselben elektronischen Dienstes innerhalb der Zeitdauer bereits beim Speichern des elektronischen Pseudonyms erkannt.

Gemäß einer Ausführungsform ist die elektronische Identifikation die Restricted Identification des elektronischen Identifikationsdokumentes. Die Restricted Identification kann beispielsweise gemäß der Norm BSI TR-03110 vorliegen.

Gemäß einer Ausführungsform wird zur Erzeugung des elektronischen Pseudonyms ein kryptographischer Wert, insbesondere ein Hash-Wert oder Schlüssel, auf der Basis der elektronischen Identifikation oder durch die elektronische Verarbeitung der elektronischen Identifikation erzeugt.

Gemäß einer Ausführungsform umfasst das Verfahren ferner das Empfangen einer weiteren elektronischen Aufforderung zum Ausführen eines elektronischen Dienstes über das Kommunikationsnetzwerk, das Empfangen einer weiteren elektronischen Identifikation eines weiteren elektronischen Identifikationsdokumentes über das Kommunikationsnetzwerk, das Erzeugen eines weiteren elektronischen Pseudonyms auf der Basis der weiteren elektronischen Identifikation, und das temporäre Speichern des weiteren elektronischen Pseudonyms für eine vorbestimmte Zeitdauer, insbesondere für die vorbestimmte Zeitdauer, in dem Speicher, um die weitere elektronische Aufforderung zu erfassen. Dadurch kann eine Vielzahl von unterschiedlichen elektronischen Diensten in derselben Weise überwacht werden.

Gemäß einem weiteren Aspekt betrifft die Erfindung eine Serverentität zur Ausführung eines elektronischen Dienstes, mit einer Kommunikationsschnittstelle zum Empfangen einer elektronischen Aufforderung über ein Kommunikationsnetzwerk zur Ausführung eines elektronischen Dienstes, wobei die elektronische Aufforderung einem elektronischen Identifikationsdokument einer Person zugeordnet ist, und zum Empfangen einer elektronischen Identifikation eines elektronischen Identifikationsdokumentes über das Kommunikationsnetzwerk, einem Prozessor zum Erzeugen eines elektronischen Pseudonyms der Person auf der Basis der elektronischen Identifikation, und einem Speicher zum temporären Speichern des elektronischen Pseudonyms für eine vorbestimmte Zeitdauer, um die elektronische Aufforderung zu erfassen.

Gemäß einer Ausführungsform ist die Serverentität eingerichtet, das Verfahren zum Erfassen einer elektronischen Aufforderung zur Ausführung eines elektronischen Dienstes auszuführen.

Die Serverentität kann beispielsweise eingerichtet sein, ein elektronisches Pseudonym, beispielsweise die Restricted Identification, aus dem elektronischen Identifikationsdokument über das Kommunikationsnetzwerk, beispielsweise das Internet, auszulesen. Hierzu kann die Serverentität eine Kommunikationsverbindung zu einem Kommunikationsterminal oder einem Dokumentenlesegerät, mit welchen das elektronische Identifikationsdokument unmittelbar verbunden sein kann, aufbauen.

Die Serverentität kann eingerichtet sein, die Ausführung des elektronischen Dienstes zu veranlassen oder zu unterbinden oder den elektronischen Dienst selber auszuführen oder zu stoppen.

Weitere Funktionalität der Serverentität ergibt sich unmittelbar aus den Merkmalen des Verfahrens zum Erfassen einer elektronischen Aufforderung zur Ausführung eines elektronischen Dienstes.

Gemäß einem weiteren Aspekt betrifft die Erfindung ein Computerprogramm zur Ausführung des Verfahrens zum Erfassen einer elektronischen Aufforderung zur Ausführung eines elektronischen Dienstes, wenn das Computerprogramm auf einem Computer ausgeführt wird.

Das Computerprogramm kann beispielsweise auf der vorgenannten Serverentität ausgeführt werden.

Weitere Ausführungsbeispiele werden Bezug nehmend auf die beiliegenden Figuren beschrieben. Es zeigen:
Fig. 1 ein Kommunikationsszenario gemäß einer Ausführungsform; und
Fig. 2 ein Ablaufdiagramm des Verfahrens zum Erfassen einer elektronischen Aufforderung zur Ausführung eines elektronischen Dienstes gemäß einer Ausführungsform.

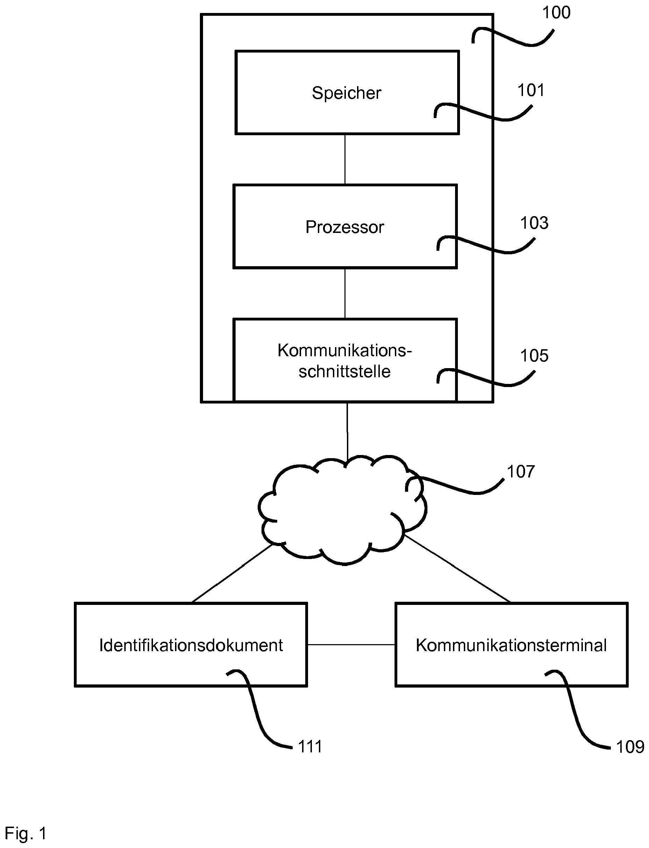

Fig. 1 zeigt ein Kommunikationsszenario mit einer Serverentität 100, welche einen Speicher 101, einen Prozessor 103 sowie eine Kommunikationsschnittstelle 105 umfasst.

Die Serverentität 100 kommuniziert über ein Kommunikationsnetzwerk 107, beispielsweise dem Internet, mit einem Kommunikationsterminal 109 und, optional, mit einem elektronischen Identifikationsdokument 111.

Die Serverentität 100 ist beispielsweise eingerichtet, einen elektronischen Dienst auszuführen. Hierzu kann eine Person über das Kommunikationsterminal 109, beispielsweise einen PC, eine Kommunikationsverbindung zu der Serverentität 100 aufbauen und eine elektronische Aufforderung zur Ausführung des elektronischen Dienstes elektronisch übertragen.

Die elektronische Aufforderung wird durch die Kommunikationsschnittstelle 105 empfangen und erfasst. Bevor der elektronische Dienst ausgeführt wird, wird die elektronische Identifikation, beispielsweise die Restricted Identity, des elektronischen Identifikationsdokumentes 111 über das Kommunikationsnetzwerk 107 durch die Serverentität 100 abgerufen. Hierzu kann die Serverentität 100 eine Kommunikationsverbindung zu dem elektronischen Identifikationsdokument 111 aufbauen. Ist das Identifikationsdokument 111 mit dem Kommunikationsterminal 109 in Verbindung, so kann die Kommunikationsverbindung zu dem elektronischen Identifikationsdokument 111 über das Kommunikationsterminal 109 und ggf. ein an dieses angeschlossenes Dokumentenlesegerät aufgebaut werden. Alternativ kann die Kommunikationsverbindung zu einem anderen Kommunikationsterminal oder direkt zu einem Dokumentenlesegerät, das ein Auslesen des elektronischen Identifikationsdokumentes 111 ermöglicht, aufgebaut werden.

Daraufhin empfängt die Kommunikationsschnittstelle 105 die elektronische Identifikation, welche in dem Speicher 101 gespeichert wird und ebenfalls zum Zwecke der Erfassung der Aufforderung genutzt werden kann.

Gemäß einer Ausführungsform berechnet der Prozessor 103 auf der Basis der elektronischen Identifikation, beispielsweise durch eine Hashwertberechnung, das elektronische Pseudonym, das in dem Speicher 101 für eine vorbestimmte Zeitdauer temporär gespeichert wird.

Erfolgt innerhalb der vorbestimmten Zeitdauer eine erneute Aufforderung der Ausführung desselben elektronischen Dienstes, so kann das dann neu berechtete elektronische Pseudonym mit dem vorgespeicherten elektronischen Pseudonym verglichen werden. Bei Übereinstimmung beider elektronischer Pseudonyme kann die erneute Ausführung des elektronischen Dienstes unterbunden werden.

Nach Ablauf der vorbestimmten Zeitdauer wird das elektronische Pseudonym aus dem Speicher 101 gelöscht, sodass der elektronische Dienst frei ausgeführt werden kann.

Die vorstehenden Ausführungen gelten sinngemäß für unterschiedliche elektronische Dienste und unterschiedliche elektronische Pseudonyme.

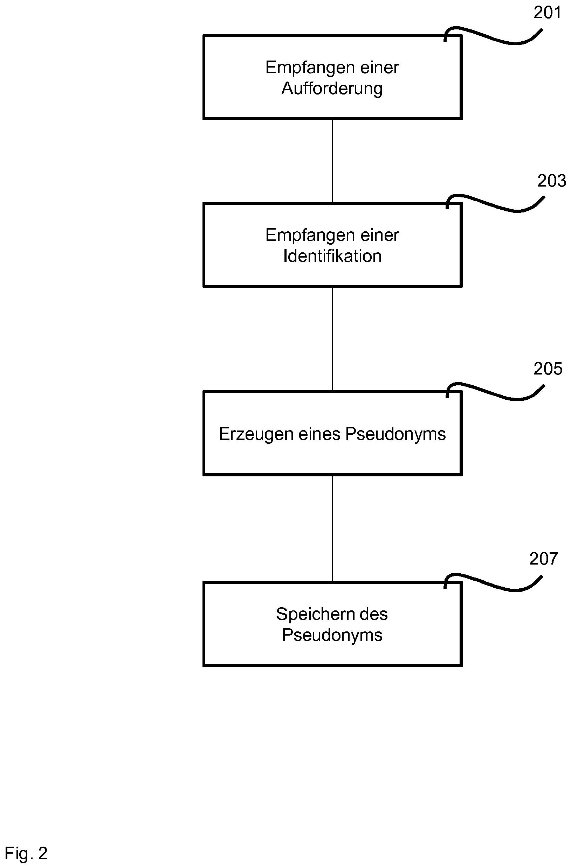

Fig. 2 zeigt ein Diagramm eines korrespondierenden Verfahrens zum Erfassen einer elektronischen Aufforderung zur Ausführung eines elektronischen Dienstes, wobei die elektronische Aufforderung einem elektronischen Identifikationsdokument einer Person zugeordnet ist, wobei das elektronische Identifikationsdokument mit einer elektronischen Identifikation versehen ist. Das Verfahren umfasst das Empfangen 201 der elektronischen Aufforderung über ein Kommunikationsnetzwerk, das Empfangen 203 der elektronischen Identifikation des elektronischen Identifikationsdokumentes über das Kommunikationsnetzwerk, das Erzeugen 205 eines elektronischen Pseudonyms der Person auf der Basis der elektronischen Identifikation, und das temporäre Speichern des elektronischen Pseudonyms für eine vorbestimmte Zeitdauer in einem Speicher, um die elektronische Aufforderung zu erfassen.

Die Schritte des Empfangens 201 und 203 können gleichzeitig oder nacheinander ausgeführt werden.

Das Verfahren kann beispielsweise mittels der Serverentität 100 durchgeführt werden.

### Bezugszeichenliste

- 100: Serverentität
- 101: Speicher
- 103: Prozessor
- 105: Kommunikationsschnittstelle
- 107: Kommunikationsnetzwerk
- 109: Kommunikationsterminal
- 111: Identifikationsdokument

- 201: Empfangen einer Aufforderung
- 203: Empfangen einer Identifikation
- 205: Erzeugen eines Pseudonyms
- 207: Speichern des Pseudonyms

## Patentansprüche

1. Verfahren zum Erfassen einer elektronischen Aufforderung zur Ausführung eines elektronischen Dienstes, wobei die elektronische Aufforderung einem elektronischen Identifikationsdokument (111) einer Person zugeordnet ist, wobei das elektronische Identifikationsdokument (111) mit einer elektronischen Identifikation versehen ist, und wobei das Verfahren die folgenden Merkmale umfasst:
Empfangen (201) der elektronischen Aufforderung über ein Kommunikationsnetzwerk (107);
Empfangen (203) der elektronischen Identifikation des elektronischen Identifikationsdokumentes (111) über das Kommunikationsnetzwerk (107);
Erzeugen (205) eines elektronischen Pseudonyms der Person auf der Basis der elektronischen Identifikation; und
temporäres Speichern (207) des elektronischen Pseudonyms für eine vorbestimmte Zeitdauer in einem Speicher (101), um die elektronische Aufforderung zu erfassen;
wobei das elektronische Pseudonym nach Ablauf der vorbestimmten Zeitdauer aus dem Speicher (101) gelöscht wird, wobei der elektronische Dienst nur dann ausgeführt wird, wenn das elektronische Pseudonym zum Zeitpunkt des Empfangs (201) der elektronischen Aufforderung nicht bereits in dem Speicher (101) gespeichert ist oder in dem Speicher (101) gespeichert und einem anderen elektronischen Dienst zugeordnet ist.

2. Verfahren nach Anspruch 1, wobei die elektronische Aufforderung zusammen mit der elektronischen Identifikation empfangen wird.

3. Verfahren nach einem der vorstehenden Ansprüche, bei dem zum Empfangen (203) der elektronischen Identifikation eine Kommunikationsverbindung zu dem elektronischen Identifikationsdokument (111), insbesondere über ein Kommunikationsnetzwerk (107), aufgebaut wird.

4. Verfahren nach einem der vorstehenden Ansprüche, bei dem das elektronische Pseudonym mit einem in dem Speicher (101) gespeicherten weiteren elektronischen Pseudonym verglichen wird, wobei der elektronische Dienst ausgeführt wird, falls das elektronische Pseudonym und das weitere elektronischen Pseudonym unterschiedlich sind oder unterschiedlichen elektronischen Diensten zugeordnet sind, und wobei die Ausführung des elektronischen Dienstes unterbunden wird oder die empfangene Aufforderung verworfen wird, falls das elektronische Pseudonym und das weitere elektronische Pseudonym gleich sind oder falls das elektronische Pseudonym und das weitere elektronische Pseudonym gleich sind und demselben elektronischen Dienst zugeordnet sind.

5. Verfahren nach einem der vorstehenden Ansprüche, bei dem ein Hinweissignal erzeugt wird, wenn das elektronische Pseudonym zum Zeitpunkt des Empfangs (201) der Aufforderung in dem Speicher (101) bereits gespeichert ist oder wenn der elektronische Dienst nicht ausgeführt wird.

6. Verfahren nach einem der vorstehenden Ansprüche, bei dem das elektronische Pseudonym nur dann in dem Speicher (101) gespeichert wird, wenn das elektronische Pseudonym nicht bereits in dem Speicher (101) aufgrund einer vorangegangenen Aufforderung zur Ausführung desselben elektronischen Dienstes, insbesondere zum Zeitpunkt des Empfangs (201) der elektronischen Aufforderung, gespeichert ist.

7. Verfahren nach einem der vorstehenden Ansprüche, wobei die elektronische Identifikation die Restricted Identification des elektronischen Identifikationsdokumentes (111) ist.

8. Verfahren nach einem der vorstehenden Ansprüche, wobei zur Erzeugung (205) des elektronischen Pseudonyms ein kryptographischer Wert, insbesondere ein Hash-Wert, auf der Basis der elektronischen Identifikation oder durch die elektronische Verarbeitung der elektronischen Identifikation erzeugt wird.

9. Verfahren nach einem der vorstehenden Ansprüche, mit:
Empfangen (201) einer weiteren elektronischen Aufforderung zum Ausführen eines elektronischen Dienstes über das Kommunikationsnetzwerk (107);
Empfangen (203) einer weiteren elektronischen Identifikation eines weiteren elektronischen Identifikationsdokumentes (111) über das Kommunikationsnetzwerk (107);
Erzeugen (205) eines weiteren elektronischen Pseudonyms auf der Basis der weiteren elektronischen Identifikation; und
temporäres Speichern (207) des weiteren elektronischen Pseudonyms für eine vorbestimmte Zeitdauer, insbesondere für die vorbestimmte Zeitdauer, in dem Speicher (101), um die weitere elektronische Aufforderung zu erfassen.

10. Serverentität (100) zur Ausführung eines elektronischen Dienstes, mit:
einer Kommunikationsschnittstelle (105) zum Empfangen (201) einer elektronischen Aufforderung über ein Kommunikationsnetzwerk (107) zur Ausführung eines elektronischen Dienstes, wobei die elektronische Aufforderung einem elektronischen Identifikationsdokument (111) einer Person zugeordnet ist, und zum Empfangen (203) einer elektronischen Identifikation eines elektronischen Identifikationsdokumentes (111) über das Kommunikationsnetzwerk (107);
einem Prozessor (103) zum Erzeugen (205) eines elektronischen Pseudonyms der Person auf der Basis der elektronischen Identifikation; und
einem Speicher (101) zum temporären Speichern (207) des elektronischen Pseudonyms für eine vorbestimmte Zeitdauer, um die elektronische Aufforderung zu erfassen;
wobei die Serverentität (100) derart eingerichtet ist, dass das elektronische Pseudonym nach Ablauf der vorbestimmten Zeitdauer aus dem Speicher (101) gelöscht wird und dass der elektronische Dienst nur dann ausgeführt wird, wenn das elektronische Pseudonym zum Zeitpunkt des Empfangs (201) der elektronischen Aufforderung nicht bereits in dem Speicher (101) gespeichert ist oder in dem Speicher (101) gespeichert und einem anderen elektronischen Dienst zugeordnet ist.

11. Serverentität (100) nach Anspruch 10, welche eingerichtet ist, das Verfahren nach einem der Ansprüche 1 bis 9 auszuführen.

12. Computerprogramm zur Ausführung des Verfahrens nach einem der Ansprüche 1 bis 9, wenn das Computerprogramm auf einem Computer ausgeführt wird.

## Claims

1. Method for recording an electronic request to execute an electronic service, wherein the electronic request is associated with an electronic identification document (111) of a person, wherein the electronic identification document (111) is provided with an electronic identification, and wherein the method comprises the following features:
receiving (201) the electronic request via a communication network (107);
receiving (203) the electronic identification of the electronic identification document (111) via the communication network (107);
generating (205) an electronic pseudonym for the person based on the electronic identification; and
temporarily storing (207) the electronic pseudonym in a memory (101) for a predefined period of time in order to record the electronic request;
wherein the electronic pseudonym is deleted from the memory (101) once the predefined period of time has elapsed, wherein the electronic service is executed only when, at the time of receipt (201) of the electronic request, the electronic pseudonym is not already stored in the memory (101) or is stored in the memory (101) and is associated with a different electronic service.

2. Method according to claim 1, wherein the electronic request is received together with the electronic identification.

3. Method according to one of the preceding claims, in which, in order to receive (203) the electronic identification, a communication link to the electronic identification document (111) is established, in particular via a communication network (107).

4. Method according to one of the preceding claims, in which the electronic pseudonym is compared with a further electronic pseudonym that is stored in the memory (101), wherein the electronic service is executed if the electronic pseudonym and the further electronic pseudonym are different or are associated with different electronic services, and wherein the execution of the electronic service is suppressed or the received request is rejected if the electronic pseudonym and the further electronic pseudonym are the same or if the electronic pseudonym and the further electronic pseudonym are the same and are associated with the same electronic service.

5. Method according to one of the preceding claims, in which an alert signal is generated if the electronic pseudonym is already stored in the memory (101) at the time of receipt (201) of the request or if the electronic service will not be executed.

6. Method according to one of the preceding claims, in which the electronic pseudonym is stored in the memory (101) only when the electronic pseudonym is not already stored in the memory (101) as a result of an earlier request to execute the same electronic service, in particular at the time of receipt (201) of the electronic request.

7. Method according to one of the preceding claims, wherein the electronic identification is the Restricted Identification of the electronic identification document (111).

8. Method according to one of the preceding claims, wherein, in order to generate (205) the electronic pseudonym, a cryptographic value, in particular a hash value, is generated on the basis of the electronic identification or by the electronic processing of the electronic identification.

9. Method according to one of the preceding claims, which comprises:
receiving (201) via the communication network (107) a further electronic request to execute an electronic service;
receiving (203) via the communication network (107) a further electronic identification of a further electronic identification document (111);
generating (205) a further electronic pseudonym based on the further electronic identification; and
temporarily storing (207) the further electronic pseudonym in the memory (101) for a predefined period of time, in particular for the predefined period of time, in order to record the further electronic request.

10. Server entity (100) for executing an electronic service, comprising:
a communication interface (105) for receiving (201) via a communication network (107) an electronic request to execute an electronic service, wherein the electronic request is associated with an electronic identification document (111) of a person, und for receiving (203) via the communication network (107) an electronic identification of an electronic identification document (111);
a processor (103) for generating (205) an electronic pseudonym for the person based on the electronic identification; and
a memory (101) for temporarily storing (207) the electronic pseudonym for a predefined period of time in order to record the electronic request;
wherein the server entity (100) is designed such that the electronic pseudonym is deleted from the memory (101) once the predefined period of time has elapsed, and such that the electronic service is recorded only when, at the time of receipt (201) of the electronic request, the electronic pseudonym is not already stored in the memory (101) or is stored in the memory (101) and is associated with a different electronic service.

11. Server entity (100) according to claim 10, which is designed to carry out the method according to one of claims 1 to 9.

12. Computer program for carrying out the method according to one of claims 1 to 9 when the computer program is run on a computer.

## Revendications

1. Procédé de saisie d'une demande électronique d'exécution d'un service électronique, où la demande électronique est associée à un document d'identification électronique (111) d'une personne, où le document d'identification électronique (111) est pourvu d'une identification électronique, et où ledit procédé comporte les caractéristiques suivantes :
réception (201) de la demande électronique via un réseau de communication (107) ;
réception (203) de l'identification électronique du document d'identification électronique (111) via le réseau de communication (107) ;
génération (205) d'un pseudonyme électronique de la personne sur la base de l'identification électronique ; et
sauvegarde temporaire (207) du pseudonyme électronique dans une mémoire (101) pour une durée définie, afin de saisir la demande électronique ;
le pseudonyme électronique étant supprimé de la mémoire (101) à l'expiration de la durée définie, le service électronique n'étant exécuté que si le pseudonyme électronique n'est pas déjà enregistré dans la mémoire (101) au moment de la réception (201) de la demande électronique ou est enregistré dans la mémoire (101) et associé à un autre service électronique.

2. Procédé selon la revendication 1, où la demande électronique est reçue avec l'identification électronique.

3. Procédé selon l'une des revendications précédentes, où, pour la réception (203) de l'identification électronique, une liaison de communication est établie avec le document d'identification électronique (111), en particulier via un réseau de communication (107).

4. Procédé selon l'une des revendications précédentes, où le pseudonyme électronique est comparé à un autre pseudonyme électronique sauvegardé dans la mémoire (101), le service électronique étant exécuté si le pseudonyme électronique et l'autre pseudonyme électronique sont différents ou associés à des services électroniques différents, et l'exécution du service électronique étant empêchée ou la demande reçue rejetée, si le pseudonyme électronique et l'autre pseudonyme électronique sont identiques ou si le pseudonyme électronique et l'autre pseudonyme électronique sont identiques et associés au même service électronique.

5. Procédé selon l'une des revendications précédentes, où un signal d'avertissement est généré si le pseudonyme électronique est déjà sauvegardé dans la mémoire (101) au moment de la réception (201) de la demande ou si le service électronique n'est pas exécuté.

6. Procédé selon l'une des revendications précédentes, où le pseudonyme électronique n'est sauvegardé dans la mémoire (101) que si ledit pseudonyme électronique n'est pas déjà sauvegardé dans la mémoire (101) en raison d'une précédente demande d'exécution du même service électronique, en particulier au moment de la réception (201) de la demande électronique.

7. Procédé selon l'une des revendications précédentes, où l'identification électronique est l'identification restreinte (Restricted Identification) du document d'identification électronique (111).

8. Procédé selon l'une des revendications précédentes, où, pour la génération (205) du pseudonyme électronique, une valeur cryptographique, en particulier une valeur de hachage, est générée sur la base de l'identification électronique ou par traitement électronique de l'identification électronique.

9. Procédé selon l'une des revendications précédentes, comprenant :
la réception (201) d'une autre demande électronique d'exécution d'un service électronique via le réseau de communication (107) ;
la réception (203) d'une autre identification électronique d'un autre document d'identification électronique (111) via le réseau de communication (107) ;
la génération (205) d'un autre pseudonyme électronique sur la base de l'autre identification électronique ; et
la sauvegarde temporaire (207) dans la mémoire (101) de l'autre pseudonyme électronique pour une durée définie, en particulier pendant la durée définie permettant de saisir l'autre demande électronique.

10. Entité de serveur (100) pour l'exécution d'un service électronique, comprenant :
une interface de communication (105) pour la réception (201) d'une demande électronique via un réseau de communication (107) afin d'exécuter un service électronique, où la demande électronique est associée à un document d'identification électronique (111) d'une personne, et pour la réception (203) d'une identification électronique d'un document d'identification électronique (111) via le réseau de communication (107) ;
un processeur (103) pour la génération (205) d'un pseudonyme électronique de la personne sur la base de l'identification électronique ; et
une mémoire (101) pour la sauvegarde temporaire (207) du pseudonyme électronique pour une durée définie, afin de saisir la demande électronique ;
où l'entité de serveur (100) est prévue pour supprimer de la mémoire (101) le pseudonyme électronique à l'expiration de la durée définie et le service électronique n'est exécuté que si le pseudonyme électronique n'est pas déjà enregistré dans la mémoire (101) au moment de la réception (201) de la demande électronique ou est enregistré dans la mémoire (101) et associé à un autre service électronique.

11. Entité de serveur (100) selon la revendication 10, prévue pour exécuter le procédé selon l'une des revendications 1 à 9.

12. Programme informatique pour l'exécution du procédé selon l'une des revendications 1 à 9, quand ledit programme informatique est lancé sur un ordinateur.
